(19) Europäisches Patentamt / European Patent Office / Office européen des brevets

(11) **EP 4 429 145 A1**

(12) **EUROPEAN PATENT APPLICATION**
published in accordance with Art. 153(4) EPC

(43) Date of publication:
**11.09.2024 Bulletin 2024/37**

(21) Application number: **22890461.1**

(22) Date of filing: **04.11.2022**

(51) International Patent Classification (IPC):
*H04L 1/18* (2023.01)      *H04L 5/00* (2006.01)
*H04W 72/04* (2023.01)     *H04W 72/12* (2023.01)

(52) Cooperative Patent Classification (CPC):
**H04L 1/18; H04L 5/00; H04W 72/04; H04W 72/12**

(86) International application number:
**PCT/KR2022/017282**

(87) International publication number:
**WO 2023/080730 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2021 KR 20210150808**

(71) Applicant: **LG Electronics Inc.**
**Yeongdeungpo-gu**
**Seoul 07336 (KR)**

(72) Inventors:
• **LEE, Youngdae**
  **Seoul 06772 (KR)**
• **YANG, Suckchel**
  **Seoul 06772 (KR)**
• **KIM, Seonwook**
  **Seoul 06772 (KR)**

(74) Representative: **Plasseraud IP**
**104 Rue de Richelieu**
**CS92104**
**75080 Paris Cedex 02 (FR)**

(54) **METHOD AND DEVICE FOR PERFORMING TERMINAL-SPECIFIC TRANSMISSION AND RECEPTION AND GROUP COMMON TRANSMISSION AND RECEPTION IN WIRELESS COMMUNICATION SYSTEM**

(57)    Disclosed are a method and device for terminal-specific transmission and reception and group common transmission and reception in a wireless communication system. A method for performing downlink reception in a wireless communication system according to one embodiment of the present disclosure may comprise the steps of: receiving configuration information for at least one first CORESET for a terminal-specific PDCCH; receiving configuration information for at least one second CORESET for a group common PDCCH; monitoring the terminal-specific PDCCH and the group common PDCCH according to QCL characteristics set in a specific CORESET on the basis of the at least one first CORESET and the at least one second CORESET overlapping in the same PDCCH monitoring occasion; and receiving control information from at least one of the terminal-specific PDCCH and the group common PDCCH.

FIG.7

**Description**

[Technical Field]

The present disclosure relates to a wireless communication system, and more particularly, to a method and apparatus for performing UE-specific transmission and reception and group common transmission and reception in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and apparatus for performing UE-specific transmission and reception and group common transmission and reception in a wireless communication system.

An additional object of the present disclosure is to provide a method and apparatus for distinguishing between UE-specific transmission and group common transmission according to a downlink control information (DCI) format and a search space in a wireless communication system.

An additional technical object of the present disclosure is to provide a method and apparatus for efficiently transmitting and receiving control information when CORESETs for various types of transmission overlap in a wireless communication system.

The technical objects to be achieved by the present disclosure are not limited to the above-described technical objects, and other technical objects which are not described herein will be clearly understood by those skilled in the pertinent art from the following description.

[Technical Solution]

A method for performing downlink reception by a user equipment (UE) in a wireless communication system according to an aspect of the present disclosure may comprise: receiving configuration information on at least one first control resource set (CORESET) for a UE-specific physical downlink control channel (PDCCH); receiving configuration information on at least one second CORESET for a group common PDCCH; based on overlapping of the at least one first CORESET and the at least one second CORESET at the same PDCCH monitoring occasion, performing monitoring on the UE-specific PDCCH and the group common PDCCH accodring to quasi co-location (QCL) properties configured for a specific CORESET; and receiving control information on at least one of the UE-specific PDCCH or the group common PDCCH. Herein, the specific CORESET may correspond to a CORESET associated with a search space set having a lowest index among the at least one first CORESET and the at least one second CORESET. In addition, the monitored group common PDCCH may include a PDCCH for multicast transmission except for a PDCCH for broadcast transmission.

A method for performing downlink transmission by a base station in a wireless communication system according to an additional aspect of the present disclosure may comprise: transmitting configuration information on at least one first control resource set (CORESET) for a UE-specific physical downlink control channel (PDCCH); transmitting configuration information on at least one second CORESET for a group common PDCCH; and transmitting control information on at least one of the UE-specific PDCCH or the group common PDCCH. Herein, based on overlapping of the at least one first CORESET and the at least one second CORESET at the same PDCCH monitoring occasion, monitoring on the UE-specific PDCCH and the group common PDCCH accodring to quasi co-location (QCL) properties configured for a specific CORESET may be performed. In addition, the specific CORESET may correspond to a CORESET associated with a search space set having a lowest index among the at least one first CORESET and the at least one second CORESET. The monitored group common PDCCH includes a PDCCH for multicast transmission except for a PDCCH for broadcast transmission.

[Technical Effects]

According to an embodiment of the present disclosure, a method and apparatus for performing UE-specific transmission and reception and group common transmission and reception in a wireless communication system may be provided.

According to an embodiment of the present disclosure, a method and apparatus for distinguishing between UE-specific transmission and group common transmission according to a downlink control information (DCI) format and a search space in a wireless communication system may be provided.

According to an embodiment of the present disclosure, a method and apparatus for efficiently transmitting and receiving control information when CORESETs for various types of transmission overlap in a wireless communication system may be provided.

According to an embodiment of the present disclosure, a method and apparatus for efficiently performing various types of transmission by suitably defining a quasi co-location (QCL) relationship for group common PDCCH monitoring performed by a plurality of UE may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram illustrating an operation of a UE for a downlink transmission/reception method according to an embodiment of the present disclosure.
FIG. 8 is a diagram illustrating an operation of a base station for a downlink transmission/reception method according to an embodiment of the present disclosure.
FIG. 9 is a diagram for explaining an example of MBS HARQ-ACK operation according to the present disclosure.
FIG. 10 is a diagram which illustrates a block diagram of a wireless communication system according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power
Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

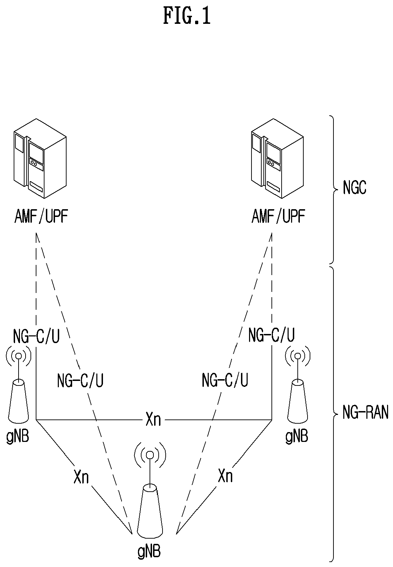

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

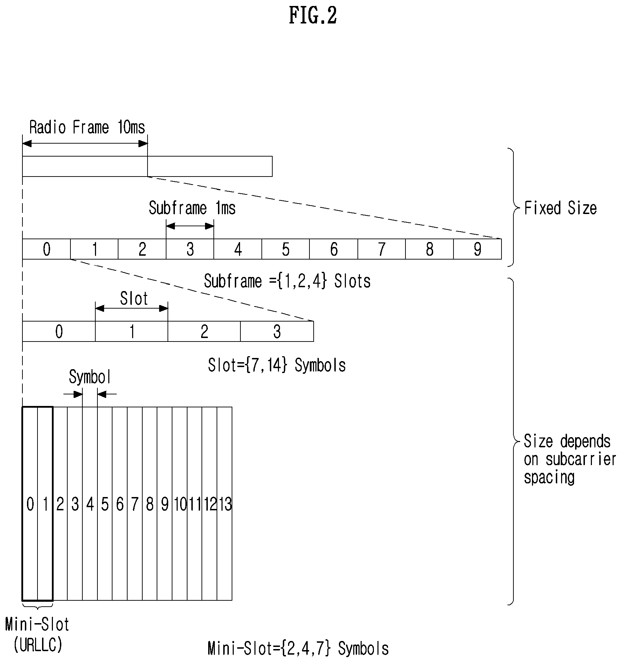

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f=1/(\Delta f_{max}N_f/100) \cdot T_c=10$ms. Here, a radio frame is configured with 10 subframes having a duration of $T_{sf}= (\Delta f_{max}N_f/1000) \cdot T_c=1$ms, respectively. In this case, there may be one set of frames for an uplink and one set of frames for a downlink. In addition, transmission in an uplink frame No. i from a terminal should start earlier by $T_{TA}= (N_{TA}+N_{TA,offset}) T_c$ than a corresponding downlink frame in a corresponding terminal starts. For a subcarrier spacing configuration $\mu$, slots are numbered in an increasing order of $n_s^{\mu} \in \{0, ..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,u}$ | $N_{slot}^{subframe, \mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe, \mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

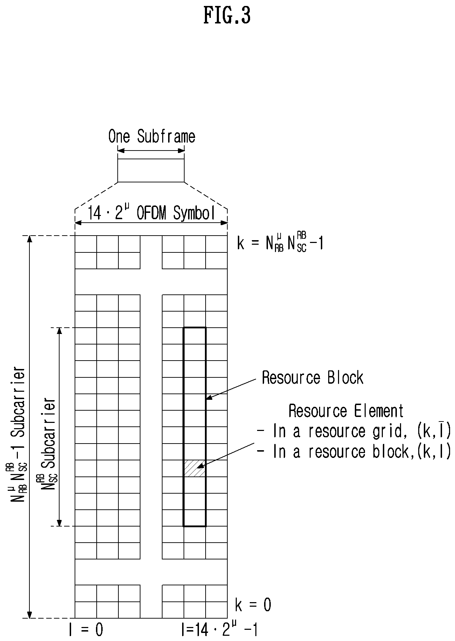

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0,..., $N_{RB}^{\mu}N_{sc}^{RB}$-1 is an index in a frequency domain and l'=0, ...,$2^{\mu}N_{symb}^{(\mu)}$-1 refers to a position of a symbol in a subframe. When referring to a resource element in a slot, an index pair (k,l) is used. Here, l=0, ..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{\mathrm{CRB}}^{\mu} = \left\lfloor \frac{k}{N_{\mathrm{sc}}^{\mathrm{RB}}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{\mathrm{CRB}}^{\mu} = n_{\mathrm{PRB}}^{\mu} + N_{\mathrm{BWP},i}^{\mathrm{start},\mu}$$

$N_{BWP,i}^{start,\mu}$ is a common resource block that a BWP starts relatively to common resource block 0.

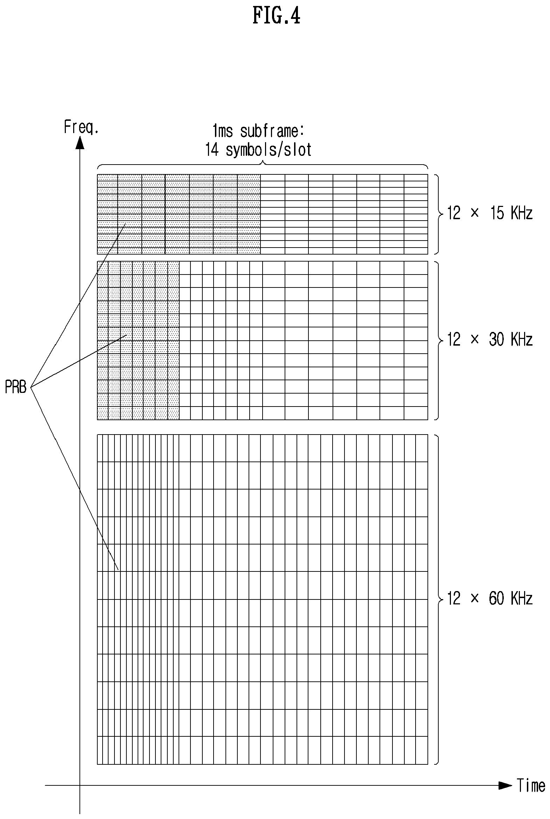

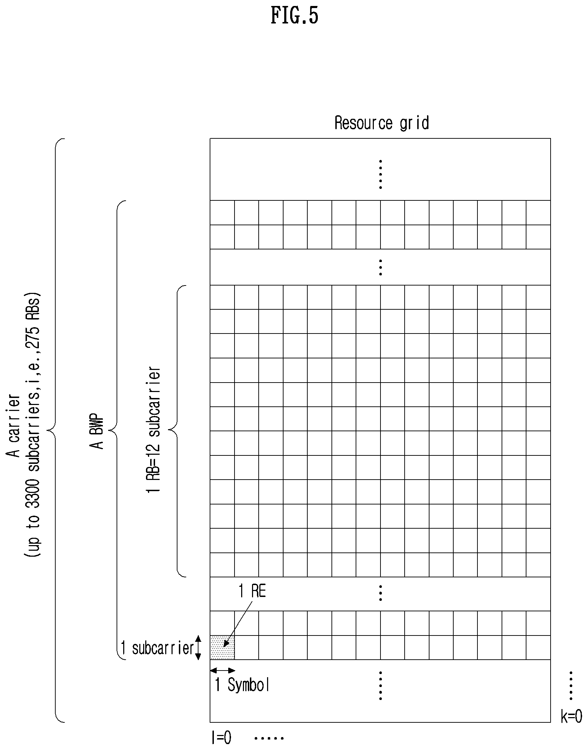

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

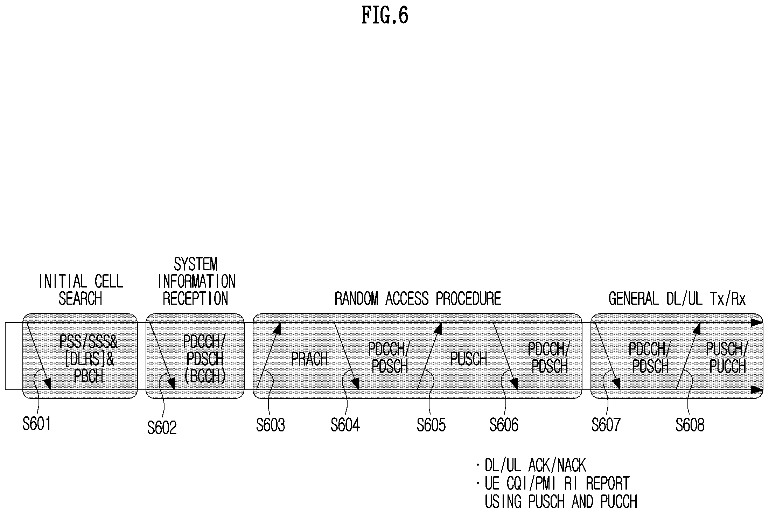

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

MBMS (Multimedia Broadcast Multicast Service)

MBMS may include a single frequency network (SFN) scheme in which a plurality of base stations or a plurality of cells are synchronized to transmit the same data to a terminal, and a single cell point to multipoint (SC-PTM) scheme for broadcasting within the corresponding cell coverage through the PDCCH/PDSCH channel.

SFN scheme may be used to provide a broadcast service to a wide area (e.g., MBMS area) through resources allocated semi-statically in advance. A multicast broadcast single frequency network (MBSFN) provides logical channels, a multicast control channel (MCCH) and a multicast traffic channel (MTCH), and both of the MCCH and the MTCH are mapped to a transport channel, a multicast channel (MCH), and the MCH is mapped to a physical channel, a physical multicast channel (PMCH). That is, a plurality of base stations/cells may be synchronized to provide the same data to a terminal through the PMCH. One base station/cell may belong to a plurality of MBSFN areas. In addition, it may be required to configure the MBSFN subframe for the MBSFN service.

SC-PTM scheme may be mainly used to provide a broadcast service only within a cell coverage through dynamic resources. SC-PTM provides one logical channel, SC-MCCH (Single Cell Multicast Control Channel) and one or more logical channels SC-MTCH (Single Cell Multicast Traffic Channel). These logical channels (i.e., SC-MCCH and SC-MTCH) are mapped to the transport channel, DL-SCH, and the transport channel DL-SCH is mapped to the physical channel PDSCH. A PDSCH transmitting data corresponding to the SC-MCCH or SC-MTCH is scheduled through a PDCCH that is CRC scrambled with a group-radio network temporary identifier (G-RNTI). Here, a temporary mobile group identity (TMGI) corresponding to the MBMS service ID may be mapped one-to-one with a specific G-RNTI value. Accordingly, if the base station provides a plurality of MBMS services, a plurality of G-RNTI values may be allocated for SC-PTM transmission. One or more terminals may perform PDCCH monitoring using a specific G-RNTI to receive a specific MBMS service. Here, a discontinuous reception (DRX) on-duration period dedicated to SC-PTM may be configured for a specific MBMS service/specific G-RNTI. In this case, the corresponding terminals may wake up only for a specific on-duration period and perform PDCCH monitoring for the G-RNTI.

SPS (semi-persistent scheduling)

The base station may provide a specific terminal with SPS configuration dedicated to the terminal, and allocate one or more downlink SPS transmission resources that are repeated according to a configured period. DCI of terminal-dedicated (or terminal-specific) PDCCH may indicate activation (SPS activation) of a specific SPS configuration index. The terminal may perform downlink reception through the activated SPS transmission resource. Such SPS transmission resource may be used for initial HARQ transmission. The base station may allocate a retransmission resource of a specific SPS configuration index through DCI of PDCCH dedicated to a terminal. For example, when the terminal reports HARQ NACK for the SPS transmission resource, the base station may allocate the retransmission resource through DCI so that the terminal may receive downlink retransmission.

DCI of PDCCH dedicated to a terminal may indicate release or deactivation of a specific SPS configuration index. In this case, the corresponding terminal does not receive the SPS transmission resource for which release/deactivation is indicated.

CRC of DCI/PDCCH for activation/retransmission/deactivation for SPS configuration / resource may be scrambled by configured scheduling-radio network temporary identifier (CS-RNTI).

MBS (Multicast Broadcast Service)

In the NR-based wireless communication system, introduction of a new MBS-based DL broadcast or DL multicast transmission scheme, which is distinct from the aforementioned MBMS (e.g., MBSFN or SC-PTM), is being discussed. For example, the network side (e.g., base station/cell/TRP) may provide a point-to-multipoint (PTM) transmission scheme and a point-to-point (PTP) transmission scheme for DL broadcast or DL multicast transmission.

In the PTM transmission scheme for MBS, the base station may transmit a group common (or group-specific) PDCCH and a group common PDSCH to a plurality of terminals. A plurality of terminals may simultaneously receive the same group common PDCCH transmission and group common PDSCH transmission, and decode the same MBS data.

In the PTP transmission scheme for MBS, the base station may transmit a terminal-dedicated (or terminal-specific) PDCCH and a terminal-dedicated PDSCH to a specific terminal. The corresponding single terminal may receive the terminal-dedicated PDCCH and a terminal-dedicated PDSCH. When there are a plurality of terminals receiving the same MBS service, the base station may individually transmit the same MBS data to each of the plurality of terminals through different terminal-dedicated PDCCHs and terminal-dedicated PDSCHs.

In group common PDSCH transmission, UEs belonging to the same group may (successfully) receive TB in different PDSCH transmissions/retransmissions. The base station may transmit a new TB based on the HARQ process to a UE that successfully received the TB at an early time (e.g., before other UEs) for a specific HARQ process. Here, the new TB may be a PTP retransmission TB for another group common PDSCH transmission, or may correspond to a new unicast TB for UE-only PDSCH transmission.

Regarding this, when the old TB and the new TB are transmitted through the same HARQ process number (HPN), there is a problem in that the UE shall be able to distinguish whether the UE-specific DCI for scheduling a new TB is for PTP retransmission of the previous TB or for unicast TB transmission.

Below, examples of distinguishing PDSCH transmission scheduled by a UE-specific DCI will be described.

Method for distinguishing PDSCH transmission scheduled by UE-specific DCI

Hereinafter, in the present disclosure, methods related to distinguishing whether PDSCH transmission scheduled by a UE-specific DCI is a PTP retransmission for group transmission or a unicast transmission exclusively for the UE Depending on the DCI format and search space (SS) are proposed.

Hereinafter, for convenience of explanation, in the present disclosure, PTP retransmission for group transmission is referred to as PTP retransmission, and UE-dedicated unicast transmission is referred to as unicast transmission.

Specifically, UE-specific DCI method for PTP retransmission (hereinafter, Embodiment 1), PDCCH monitoring method in multiple CORESETs configured with the same or different QCL types (hereinafter, Embodiment 2) and a method for determining a threshold value related to QCL application for group common transmission (hereinafter, Embodiment 3) are described.

Embodiment 1

This embodiment relates to a method of scheduling PTP retransmission through a UE-specific DCI.

In this embodiment, examples of determining by the UE the type of corresponding PDSCH transmission, based on whether the DCI scheduling PDSCH transmission (i.e., TB transmission) corresponds to a fallback DCI and/or the type of search space in which the DCI is transmitted, are described.

In the description below, determining or assuming by the UE that a specific DCI schedules PTP retransmission or unicast transmission may mean that the corresponding UE interprets and receives/decodes PDSCH transmission transmitted according to scheduling by a specific DCI as PTP retransmission or unicast transmission. In addition, of course, the base station schedules/transmits the specific DCI and the PDSCH in consideration of the UE's decisions and assumptions.

If a PTP retransmission is scheduled by a fallback DCI such as DCI format 1_0, through the example below, the UE may determine whether the UE-specific DCI schedules unicast transmission or PTP retransmission.

For example, if the fallback DCI is transmitted in a specific type of common search space (CSS) and unicast transmission is not configured to be scheduled in the specific type of CSS, the UE may determine that the fallback DCI CRC scrambled by the C-RNTI schedules PTP retransmission.

At this time, the PTP retransmission scheduled by the UE-specific DCI indicating the HPN may correspond to the retransmission of the TB that was initially transmitted by the group common PDSCH scheduled by the group common DCI indicating the same HPN. Here, the UE-specific DCI and the group common DCI may indicate not only the same HPN but also the same NDI value.

Additionally, the specific type of CSS may be specified for group common transmission such as multicast and/or broadcast. Except for the above specific types of CSS, other types may be permitted to schedule unicast transmissions.

For another example, when the fallback DCI is transmitted in a specific type of CSS and unicast transmission is configured to be scheduled in the specific type of CSS, if the fallback DCI indicates PTP retransmission in a specific field within the corresponding DCI, the UE may determine that the fallback DCI which is CRC scrambled by the C-RNTI schedules PTP retransmission.

Additionally, when the fallback DCI is transmitted in a specific type of CSS, and unicast transmission is configured to be scheduled in the specific type of CSS, if the fallback DCI does not indicate PTP retransmission in a specific field within the DCI, or if the fallback DCI does not include the specific field, the UE may determine that the corresponding fallback DCI which is CRC scrambled by the C-RNTI schedules unicast transmission.

For another example, when the fallback DCI is transmitted in the UE-specific search space (USS), if the fallback DCI instructs PTP retransmission in a specific field within the DCI, the UE may determine that the fallback DCI which is CRC scrambled by the C-RNTI schedules PTP retransmission. Here, if the fallback DCI does not indicate PTP retransmission in a specific field within the DCI, or if the fallback DCI does not include the specific field, the UE may determine that the corresponding fallback DCI which is CRC scrambled by the C-RNTI schedules unicast transmission.

Alternatively, if the fallback DCI is transmitted in the USS, the UE may assume that the fallback DCI will not be used to schedule PTP retransmission. Here, the UE may assume that a fallback DCI for a specific type of CSS is used to schedule PTP retransmissions, but not to schedule unicast transmissions. Meanwhile, the UE may assume that the fallback DCI on the USS is used to schedule unicast transmission, but is not used to schedule PTP retransmission. In this case, the UE may assume that a fallback DCI in a different type of CSS than a specific type of CSS may still schedule unicast transmission.

Unlike the examples described above, when PTP retransmission is scheduled by a fallback DCI such as DCI format 1_0, the UE may determine whether the UE-specific DCI schedules unicast transmission or PTP retransmission based on the HPN value included in the fallback DCI. The HPN value is mapped to either PTP retransmission or unicast transmission.

Here, the base station (e.g., gNB) may provide the UE with information about the mapping relationship between the HPN value and one of PTP retransmission or unicast transmission. The UE that has received the fallback DCI (i.e., UE-specific fallback DCI) may determine whether the UE-specific DCI schedules unicast transmission or PTP retransmission, based on the HPN value included in the corresponding DCI and the mapping relationship.

For example, if the HPN value included in the UE-specific DCI (i.e., the fallback DCI described above) is mapped to PTP retransmission, the UE may determine that the UE-specific DCI schedules PTP retransmission. in this case, the UE may not flush the soft buffer for the HPN value, and may store the TB scheduled by the UE-specific DCI in the soft buffer by combining the TB scheduled by the UE-specific DCI and the TB received through group common transmission. PTP retransmission scheduled by a UE-specific DCI indicating an HPN may correspond to a retransmission of a TB that was initially transmitted by a group common PDSCH scheduled by a group common DCI indicating the same HPN. Here, the UE-specific DCI and the group common DCI may indicate not only the same HPN but also the same NDI value.

For another example, when the HPN value included in the UE-specific DCI (i.e., the fallback DCI described above) is mapped to unicast transmission, the UE may determine that the UE-specific DCI schedules unicast transmission. In this case, the UE may flush the soft buffer for the HPN value and store the TB scheduled by the UE-specific DCI in the corresponding soft buffer.

Unlike the examples above, if the PTP retransmission is scheduled by a non-fallback DCI, such as DCI format 1_1 or DCI format 1_2, through the example below, the UE may determine whether the UE-specific DCI schedules unicast transmission or PTP retransmission.

For example, if the non-fallback DCI is transmitted in a specific type of CSS, and it is not configured that unicast transmission will be scheduled in the specific type of CSS, the UE may determine that the fallback DCI which is CRC scrambled by the C-RNTI schedules PTP retransmission.

At this time, the PTP retransmission scheduled by the UE-specific DCI indicating the HPN may correspond to the retransmission of the TB that was initially transmitted by the group common PDSCH scheduled by the group common DCI indicating the same HPN. Here, the UE-specific DCI and the group common DCI may indicate not only the same HPN but also the same NDI value.

Additionally, the specific type of CSS may be specified for group common transmission such as multicast and/or broadcast. Except for the above specific types of CSS, other types may be permitted to schedule unicast transmissions.

For another example, when the non-fallback DCI is transmitted in a specific type of CSS and unicast transmission is configured to be scheduled in the specific type of CSS, if the non-fallback DCI indicates PTP retransmission in a specific field within the DCI, the UE may determine that the fallback DCI which is CRC scrambled by the C-RNTI schedules PTP retransmission.

Additionally, when the non-fallback DCI is transmitted in a specific type of CSS and unicast transmission is configured to be scheduled in the specific type of CSS, if the non-fallback DCI does not indicate PTP retransmission in a specific field within the DCI, or if the non-fallback DCI does not include the specific field, the UE may determine that the non-fallback DCI which is CRC scrambled by the C-RNTI schedules unicast transmission.

As another example, when a non-fallback DCI is transmitted on the USS, if the fallback DCI indicates PTP retransmission in a specific field within the DCI, the UE may determine that the fallback DCI which is CRC scrambled by the C-RNTI schedules PTP retransmission. Here, if the fallback DCI does not indicate PTP retransmission in a specific field within the DCI, or if the fallback DCI does not include the specific field, the UE may determine that the corresponding fallback DCI which is CRC scrambled by the C-RNTI schedules unicast transmission.

Alternatively, if a non-fallback DCI is transmitted on the USS, the UE may assume that the non-fallback DCI in the USS of a specific SS index is used to schedule PTP retransmission, but not to schedule unicast transmission. Meanwhile, the UE may assume that non-fallback DCIs in USSs other than the USS of the specific SS index are used to schedule unicast transmission, but are not used to schedule PTP retransmission.

Embodiment 2

This embodiment relates to a PDCCH monitoring method in multiple CORESETs configured with the same or different QCL properties.

In this embodiment, a method for a UE to perform PDCCH monitoring in a case that PDCCH monitoring occasions overlap in multiple CORESETs configured with the same or different QCL properties for unicast and/or group common transmission (e.g., multicast/broadcast) will be proposed below.

The QCL properties in this embodiment means the QCL type for which the 'typeD' properties is configured, that is, the QCL TypeD properties. Here, the 'typeD' properties correspond to spatial (parameter)-related properties and beam/panel-related properties.

As an example, an operation of performing PDCCH monitoring for CORESET with the same QCL properties configured may refer to an operation of performing PDCCH monitoring for the CORESET associated with the TCI state in which qcl-Type corresponds to 'typeD' and the same QCL source RS (e.g. CSI-RS, SSB, etc.) is configureds.

First, assume that a UE is configured for single cell operation or carrier aggregation (CA) operation in the same frequency band and monitors PDCCH candidates in multiple CORESETs. Here, for unicast and/or multicast, the multiple CORESETs are configured to the same or different QCL properties in the active DL BWP(s) of one or more cells and the CFR(s) associated with the active DL BWP.

In this case, according to at least one of the following methods, in the active DL BWP of any of the one or more cells, the UE may monitor the PDCCH only in a specific CORESET and other CORESET(s) configured with the same QCL properties as the specific CORESET among the plurality of CORESETs described above.

For example, the specific CORESET may correspond to a CSS set with the lowest SS index in a cell with the lowest cell index containing CSS among all CSS sets for both unicast and multicast/broadcast. Otherwise (e.g., if there is no such CSS set), the specific CORESET may correspond to a USS set with the lowest index (e.g., lowest SS index) in the cell of the lowest cell index.

For another example, the specific CORESET may correspond to the CSS set with the lowest SS index in the cell of the lowest cell index including the CSS among all CSS sets for both unicast and multicast (i.e., CSS sets for broadcast are excluded). Otherwise (e.g., if there is no such CSS set), the specific CORESET may correspond to the USS set with the lowest index (e.g., lowest SS index) in the cell of the lowest cell index. In this case, PDCCH monitoring for broadcast may be performed based on a configuration for the corresponding broadcast transmission (e.g., QCL properties configured for broadcast transmission).

For another example, the specific CORESET may correspond to a CSS set with the lowest SS index in a cell with the lowest cell index including CSS excluding CSS sets for multicast and broadcast. Otherwise (e.g., if there is no such CSS set), the specific CORESET may correspond to the USS set with the lowest index in the cell with the lowest cell index among all USS sets for unicast. In this case, PDCCH monitoring for multicast and broadcast may be performed based on a configuration for the corresponding broadcast transmission (e.g., QCL properties configured for broadcast transmission).

In relation to the above-described examples, the lowest USS set index (i.e., the lowest index associated with the USS set in the above examples) may be determined for all USS sets that have at least one PDCCH candidate in overlapping PDCCH monitoring opportunities for both unicast and PTP (re)transmission. Alternatively, the lowest USS set index may be determined for all USS sets that have at least one PDCCH candidate in overlapping PDCCH monitoring occasions, except the USS set for PTP (re)transmission.

Additionally, with regard to the above-described examples, the cell with the lowest cell index may be determined among the serving cell(s), regardless of whether CFR is set in the serving cell. Alternatively, the cell with the lowest cell index may be determined among serving cell(s) for which CFR is set. Alternatively, the cell with the lowest cell index may be determined among serving cell(s) for which the DL BWP associated with the CFR is activated. Alternatively, the cell with the lowest cell index may be determined among serving cell(s) through which the service of interest may be transmitted.

Additionally, with regard to the above-described examples, the SS/PBCH block may be considered to have QCL properties different from the CSI-RS in order to determine the specific CORESET. Additionally/alternatively, in order to determine said specific CORESET, it may be assumed that the first CSI-RS associated with the SS/PBCH block in the first cell and the second CSI-RS associated with the SS/PBCH block in the second cell have the same QCL properties.

Additionally, with regard to the above-described examples, allocation of PDCCH candidates and non-overlapping CCEs for PDCCH monitoring may depend on all SS sets associated with multiple CORESETs in the active DL BWP(s) of one or more cells. Additionally, the number of active TCI states may be determined based on the number of CORESETs.

Next, assume that the UE is configured for single cell operation or CA operation in the same frequency band and monitors PDCCH candidates in multiple CORESETs (wherein none of the plurality of CORESETs has TCI state(s) set with the QCL TypeD properties). In this case, the UE may need to monitor PDCCH candidates in overlapping PDCCH monitoring occasions for SS sets associated with different CORESETs.

Embodiment 3

This embodiment relates to a method for determining a threshold value related to QCL application for group common transmission (e.g., multicast, broadcast).

In this embodiment, the threshold related to QCL application may be TimeDurationForQCL, which is configured through higher layer signaling (e.g., RRC signaling), etc. in relation to QCL application.

For reception of a group common PDSCH scheduled by the group common DCI format, the UE may determine whether the time offset between reception of the DL DCI and the corresponding PDSCH of the serving cell is greater than or equal to a QCL application-related threshold.

For example, the QCL application-related threshold may be configured through MCCH, a system information block (SIB), or dedicated signaling by a base station (e.g., gNB). Regarding that example, the QCL application-related threshold may be configured for each G-RNTI, each MTCH transmission window (for broadcast), each CFR, each DL BWP associated with the CFR, and/or each serving cell in which at least one CFR is configured.

For another example, the QCL application-related threshold may be configured in a CFR configuration, a PDCCH configuration for multicast, or a PDSCH configuration for multicast. Regarding this example, the UE may assume that the QCL application-related threshold is based on the reported UE capability. Additionally/alternatively, the UE may assume that the QCL application-related threshold is configured to the default threshold. Here, the default threshold may be configured per G-RNTI, per MTCH transmission window (for broadcast), per CFR, per DL BWP associated with the CFR, and/or per serving cell for which at least one CFR is configured. Additionally, in relation to this example, the UE may assume that the QCL application-related threshold is configured to a specific fixed value, such as the worst threshold.

As described above, after the UE determines the QCL application-related threshold (e.g., timeDurationForQCL), the YE may use the threshold value related to the QCL application according to the method described later.

For example, if the PDSCH is scheduled by a DCI format in which the TCI field does not exist and the time offset between the reception of the DL DCI and the corresponding PDSCH of the serving cell is greater than or equal to the threshold timeDurationForQCL, the UE assumes that the TCI state or QCL assumption for the PDSCH is the same as the specific TCI state or specific QCL assumption, regarding antenna port QCL for determining PDSCH. Here, the specific TCI state or specific QCL assumption corresponds to the TCI state or QCL assumption applied to the CORESET used for PDCCH transmission within the active BWP of the serving cell.

If the time offset between the reception of the DL DCI and the corresponding PDSCH is greater than or equal to the threshold timeDurationForQCL, the UE may assume that the DM-RS port of the PDSCH of the serving cell is similarly located at the same location as the RS(s) of the TCI state with respect to the QCL type parameter(s) given by the indicated TCI state.

If the UE is configured to CORESET associated with the SS configured for cross-carrier scheduling and the UE is not configured to enableDefaultBeamForCCS, the UE expects tci-PresentInDCI to be set to 'enabled' or tci-PresentDCI-1-2 to be configured for the CORESET. Additionally, if one or more TCI states configured for a serving cell scheduled by the SS set include qcl-Type set to 'typeD', the UE expects that the time offset between reception of the PDCCH detected in the SS and the corresponding PDSCH is greater than or equal to the threshold timeDurationForQCL.

If tci-PresentInDCI is set to 'enabled' or tci-PresentDCI-1-2 is configured for the CORESET scheduling the PDSCH and the time offset between the DL DCI reception and the corresponding PDSCH is greater than or equal to timeDurationForQCL, after the UE receives the initial higher layer configuration of the TCI state and before receiving the activation command, the UE may assume that the DM-RS port of the PDSCH of the serving cell is quasi co-located with a specific SS/PBCH block. Here, a specific SS/PBCH block is determined in the initial access procedure for qcl-Type set to 'typeA' and, if applicable, may also be determined for qcl-Type set to 'typeD'.

Regardless of the configurations of tci-PresentInDCI and tci-PresentDCI-1-2 in RRC connected mode, if the offset between the DL DCI and the reception of the corresponding PDSCH is less than the threshold timeDurationForQCL, and at least one set TCI state for the serving cell of the scheduled PDSCH contains qcl-Type set to 'typeD', the UE may operate as follows.

The UE may assume that the DM-RS port of the PDSCH(s) of the serving cell is quasi co-located with the RS(s) for the QCL parameter(s) used to indicate the PDCCH quasi co-location of a specific CORESET. Here, a specific CORESET is associated with the monitored search space with the lowest controlResourceSetId in the latest slot in which one or more CORESETs in the active BWP of the serving cell are monitored by the UE. In this case, when qcl-Type of PDSCH DM-RS is set to 'typeD', if they differ from those of the PDCCH DM-RS overlapping in at least one symbol, the UE is expected to give priority to reception of the PDCCH related to the corresponding CORESET. This also applies in the case of intra-band CA (when PDSCH and CORESET are in different CCs).

In addition, assume that the UE is configured with enableDefaultTCI-StatePerCoresetPoolIndex and the UE is configured by the higher layer parameter PDCCH-Config including two different coresetPoolIndex values in different ControlResourceSets. In this case, the UE assumes that the DM-RS port of the PDSCH associated with the coresetPoolIndex value of the serving cell is quasi co-located with the RS(s) for the QCL parameter(s) used to indicate the PDCCH quasi co-location of a specific CORESET. Here, the specific CORESET is associated with the monitored search space with the lowest controlResourceSetId among CORESETs, in the latest slot within the serving cell's active BWP where one or more CORESETs associated with the same coresetPoolIndex value as the PDCCH scheduling the corresponding PDSCH are monitored by the UE. The CORESETs are configured to the same coresetPoolIndex value as the PDCCH scheduling the corresponding PDSCH. In this case, if the 'QCL-TypeD' of the PDSCH DM-RS is different from the PDCCH DM-RS that overlaps in at least one symbol and is associated with the same coresetPoolIndex value, the UE is expected to give priority to reception of the PDCCH related to the corresponding CORESET. This also applies in the case of intra-band CA (when PDSCH and CORESET are in different CCs).

Additionally, if the UE is configured to enableTwoDefaultTCI-States and at least one TCI code point indicates two TCI states, the UE may assume that a PDSCH transmission occasion of the serving cell or a DM-RS port of the PDSCH are quasi co-located with the RS(s) for the QCL parameter(s) associated with the TCI state corresponding to the lowest codepoint among the TCI codepoints containing two different TCI states. Assume that the UE is configured with the upper layer parameter repeatScheme set to 'tdmSchemeA', or is configured with the upper layer parameter repeatNumber, and the offset between DL DCI reception and the first PDSCH transmission opportunity is less than the threshold timeDurationForQCL. In this case, the mapping of TCI states to PDSCH transmission occasions may be determined by replacing the indicated TCI state with the TCI state corresponding to the lowest codepoint among TCI codepoints containing two different TCI states, based on the TCI state activated in the slot with the first PDSCH transmission occasion. in this case, if the 'QCL-TypeD' in both TCI states corresponding to the lowest codepoint among the TCI codepoints including two different TCI states is different from that of the PDCCH DM-RS with which they overlap in at least one symbol, the UE is expected to give priority to reception of the PDCCH related to the corresponding CORESET. This also applies in the case of intra-band CA (when PDSCH and CORESET are in different CCs).

In all of the above-described cases, if none of the TCI states configured for the serving cell of the scheduled PDSCH is configured with qcl-Type set to 'typeD', the UE shall obtain different QCL assumptions from the TCI state(s) indicated for the scheduled PDSCH, regardless of the time offset between reception of the DL DCI and the corresponding PDSCH.

If a PDCCH carrying a scheduling DCI is received in one CC and the PDSCH scheduled by that DCI is in another CC, the threshold timeDurationForQCL is determined based on the subcarrier interval of the scheduled PDSCH. If the PDCCH subcarrier interval is smaller than the PDSCH subcarrier interval, an additional timing delay ($d^{(2^{PDCCH\ subcarrier\ spacing})}\_{(2^{PDSCH\ subcarrier\ spacing})}$) is added to the threshold timeDurationForQCL, otherwise, the value of 'd' is zero. In all cases, if the UE is configured to enableDefaultBeamForCCS, the offset between the DL DCI and the reception of the corresponding PDSCH is less than the threshold timeDurationForQCL, and the TCI field does not exist in the DL DCI, the UE obtains the QCL assumption for the scheduled PDSCH from the activated TCI state with the lowest ID applicable to the PDSCH in the active BWP of the scheduled cell.

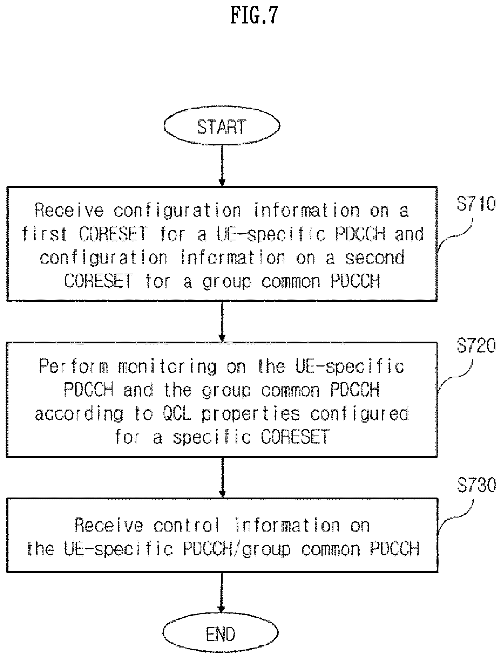

FIG. 7 is a diagram illustrating an operation of a UE for a downlink transmission/reception method according to an embodiment of the present disclosure.

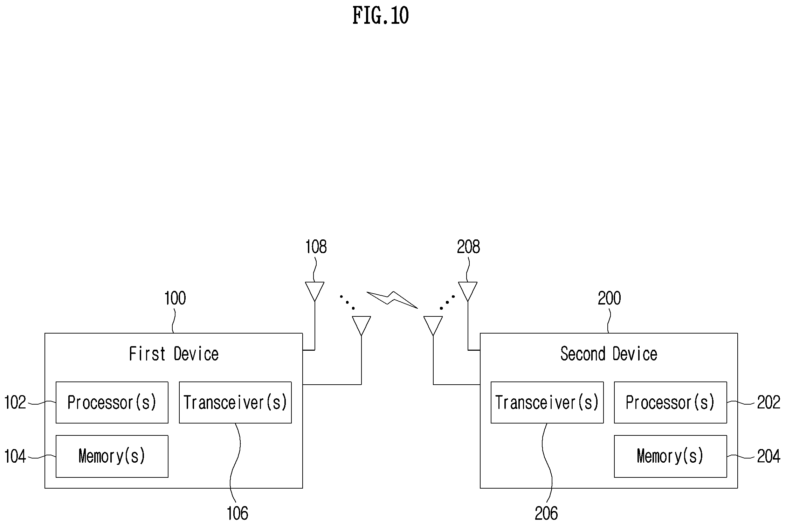

FIG. 7 illustrates the operation of a UE based on the previously proposed method (e.g., any one or a combination of embodiment 1, embodiment 2, embodiment 3 and detailed embodiments thereof). The example in FIG. 7 is for convenience of explanation and does not limit the scope of the present disclosure. Some step(s) illustrated in FIG. 7 may be omitted depending on the situation and/or setting. Additionally, the UE in FIG. 7 is only an example and may be implemented as a device illustrated in FIG. 10 below. For example, the processor 102/202 of FIG. 10 may control to transmit or receive channel/signal/data/information, etc. using the transceiver 106/206 and may control to store received channels/signals/data/information, etc. in the memory 104/204.

Additionally, the operations of FIG. 7 may be processed by one or more processors 102, 202 of FIG. 10, and the operation of FIG. 7 is stored in memory (e.g., one or more memories 104, 204 of FIG. 10) in the form of instructions/programs (e.g., instructions, executable code) for driving at least one processor (e.g., 102, 202) of FIG. 10.

Referring to FIG. 7, in step S710, the UE may receive configuration information on at least one first CORESET for the UE-specific PDCCH and configuration information on at least one second CORESET for the group common PDCCH.

Here, the two configuration information may be received through one message or may be received through separate messages. For example, the UE-specific PDCCH corresponds to the PDCCH of the unicast transmission method described above in the present disclosure, and configuration information for this may be included in PDCCH configuration information configured/provided for the unicast transmission method. Additionally, the group common PDCCH corresponds to the PDCCH of the group common transmission method described above in the present disclosure, and configuration information for this may be included in PDCCH configuration information configured/provided for the group common transmission method.

In step S720, when the at least one first CORESET and the at least one second CORESET overlap in the same PDCCH monitoring occasion, the UE may perform monitoring on the UE-specific PDCCH and/or the group common PDCCH according to QCL properties configured in a specific CORESET.

Based on the monitoring, in step S730, the UE may receive control information from at least one of the UE-specific PDCCH or the group common PDCCH. As an example, the corresponding control information may correspond to a DCI scheduling unicast PDSCH transmission and/or a DCI scheduling group common PDSCH (re)transmission.

As in the embodiment described above in the present disclosure (e.g., Embodiment 2), when multiple CORESETs overlap, the UE may perform monitoring on CORESET(s) having the same QCL properties as the QCL properties configured for a specific CORESET. In this case, the monitoring method may be specified according to the transmission method associated with the overlapping CORESET (e.g., unicast transmission, multicast transmission, broadcast transmission, etc.). As an example, the monitored group common PDCCH may include a PDCCH for multicast transmission excluding the PDCCH for broadcast transmission.

For example, the specific CORESET may correspond to a CORESET associated with a search space (SS) set having the lowest index among the at least one first CORESET and the at least one second CORESET.

The CORESET in which the UE-specific PDCCH is monitored and the CORESET in which the PDCCH for multicast transmission is monitored may correspond to a CORESET having the same QCL properties as the QCL properties configured in the specific CORESET.

The QCL properties configured in the specific CORESET may correspond to the QCL type set as the 'TypeD' properties.

Additionally, the SS set may correspond to a common search space (CSS) set or a UE-specific search space (USS) set.

For example, the SS set having the lowest index may correspond to the CSS set having the lowest SS index in the cell having the lowest cell index among one or more cells. For another example, the SS set having the lowest index may correspond to the USS set having the lowest SS index in the cell having the lowest cell index among one or more cells. Here, the USS set may be determined from among all USS sets having at least one PDCCH candidate in overlapping PDCCH monitoring occasions for the UE-specific PDCCH and the group common PDCCH.

As in the embodiments described above in the present disclosure, the one or more cells may correspond to one or more serving cells for which a common frequency resource (CFR) is configured. Alternatively, the one or more cells may correspond to one or more serving cells in which a bandwidth part (BWP) associated with the CFR is activated.

In addition, the number of active transmission configuration indicator (TCI) states related to the monitoring described in FIG. 7 may be determined based on the at least one first CORESET and the at least one second CORESET.

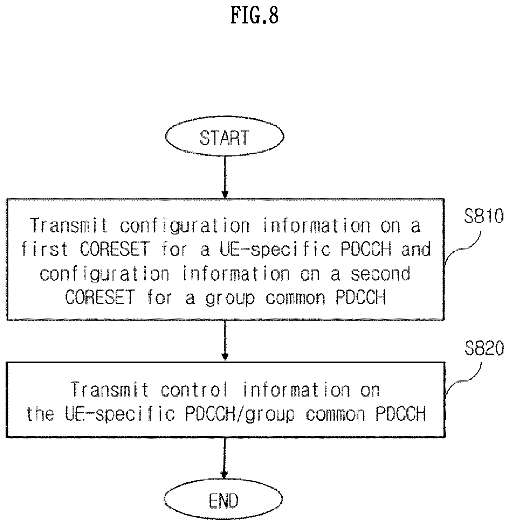

FIG. 8 is a diagram illustrating an operation of a base station for a downlink transmission/reception method according to an embodiment of the present disclosure.

FIG. 8 illustrates the operation of a base station based on the previously proposed method (e.g., any one or a combination of embodiment 1, embodiment 2, embodiment 3 and detailed embodiments thereof). The example in FIG. 8 is for convenience of explanation and does not limit the scope of the present disclosure. Some step(s) illustrated in FIG. 8 may be omitted depending on the situation and/or setting. Additionally, the base station in FIG. 8 is only an example and may be implemented as a device illustrated in FIG. 10 below. For example, the processor 102/202 of FIG. 10 may control to transmit or receive channel/signal/data/information, etc. using the transceiver 106/206 and may control to store received channels/signals/data/information, etc. in the memory 104/204.

Additionally, the operations of FIG. 8 may be processed by one or more processors 102, 202 of FIG. 10, and the operation of FIG. 8 is stored in memory (e.g., one or more memories 104, 204 of FIG. 10) in the form of instructions/programs (e.g., instructions, executable code) for driving at least one processor (e.g., 102, 202) of FIG. 10.

Referring to FIG. 8, in step S810, the base station/network may transmit configuration information on at least one first CORESET for the UE-specific PDCCH and configuration information on at least one second CORESET for the group common PDCCH.

Here, the two configuration information may be received through one message or may be received through separate messages. For example, the UE-specific PDCCH corresponds to the PDCCH of the unicast transmission method described above in the present disclosure, and configuration information for this may be included in PDCCH configuration information configured/provided for the unicast transmission method. Additionally, the group common PDCCH corresponds to the PDCCH of the group common transmission method described above in the present disclosure, and configuration information for this may be included in PDCCH configuration information configured/provided for the group common transmission method.

Thereafter, in step S820, the base station/network may transmit control information on at least one of the UE-specific PDCCH or the group common PDCCH. As an example, the corresponding control information may correspond to a DCI scheduling unicast PDSCH transmission and/or a DCI scheduling group common PDSCH (re)transmission.

In order to receive the control information in the above-described operation, when the at least one first CORESET and the at least one second CORESET overlap in the same PDCCH monitoring occasion, monitoring of the UE-specific PDCCH and/or the group common PDCCH may be performed according to QCL properties configured in a specific CORESET.

As in the embodiment described above in the present disclosure (e.g., Embodiment 2), when multiple CORESETs overlap, the UE may perform monitoring on CORESET(s) having the same QCL properties as the QCL properties configured for a specific CORESET. In this case, the monitoring method may be specified according to the transmission method associated with the overlapping CORESET (e.g., unicast transmission, multicast transmission, broadcast transmission, etc.). As an example, the monitored group common PDCCH may include a PDCCH for multicast transmission excluding the PDCCH for broadcast transmission.

For example, the specific CORESET may correspond to a CORESET associated with a search space (SS) set having the lowest index among the at least one first CORESET and the at least one second CORESET.

The CORESET in which the UE-specific PDCCH is monitored and the CORESET in which the PDCCH for multicast transmission is monitored may correspond to a CORESET having the same QCL properties as the QCL properties configured in the specific CORESET.

The QCL properties configured in the specific CORESET may correspond to the QCL type set as the 'TypeD' properties.

Additionally, the SS set may correspond to a common search space (CSS) set or a UE-specific search space (USS) set.

For example, the SS set having the lowest index may correspond to the CSS set having the lowest SS index in the cell having the lowest cell index among one or more cells. For another example, the SS set having the lowest index may correspond to the USS set having the lowest SS index in the cell having the lowest cell index among one or more cells. Here, the USS set may be determined from among all USS sets having at least one PDCCH candidate in overlapping PDCCH monitoring occasions for the UE-specific PDCCH and the group common PDCCH.

As in the embodiments described above in the present disclosure, the one or more cells may correspond to one or more serving cells for which a common frequency resource (CFR) is configured. Alternatively, the one or more cells may correspond to one or more serving cells in which a bandwidth part (BWP) associated with the CFR is activated.

In addition, the number of active transmission configuration indicator (TCI) states related to the monitoring described in FIG. 8 may be determined based on the at least one first CORESET and the at least one second CORESET.

Hereinafter, operations related to specific examples of the present disclosure will be described.

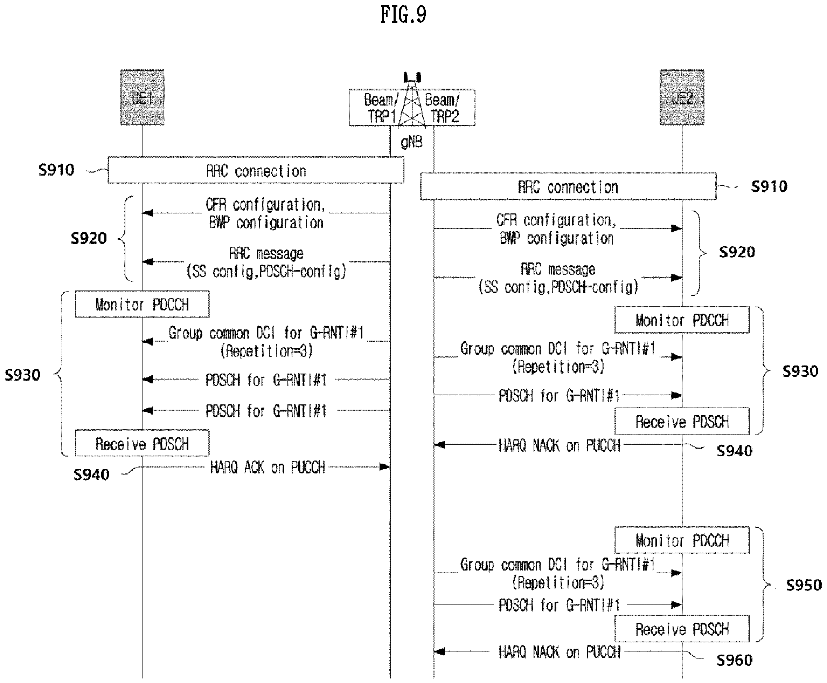

FIG. 9 is a diagram for describing an example of a MBS HARQ-ACK operation according to the present disclosure.

In the present disclosure, MBS HARQ-ACK includes HARQ-ACK for PTM PDSCH based MBS service downlink transmission and/or HARQ-ACK for PTP PDSCH based MBS service downlink transmission.

The MBS HARQ-ACK operation described in FIG. 9 may be applied in relation to the embodiments of the present disclosure described above (e.g., Embodiments 1 to 3, detailed embodiments below and operations in FIGS. 7 and 8).

A base station(gNB)/a cell shown in FIG. 9 may include a plurality of TRPs (TRP1 and TRP2). A TRP may correspond to a specific beam/TCI state/CORESET pool(control resource set pool), etc.

Before an operation of a base station (gNB) and a terminal (UE1 and UE2) shown in FIG. 9, each of terminals may receive a variety of configuration information for MBS data reception from a base station. In addition, each of terminals may be RRC-connected with a base station.

In S910, each terminal may be RRC-connected with a base station. A RRC connection may include that each terminal receives from a base station a RRC configuration message or a RRC reconfiguration message.

In S920, each terminal may receive a variety of configuration information from a base station. Configuration information may be provided for each terminal through at least one RRC message. Configuration information may include at least one of system information, terminal-group specific, or terminal-specific information. Configuration information may include a CFR configuration, a BWP configuration, a search space (SS) configuration, a PDSCH configuration, a PUCCH configuration, etc. Some configuration information (e.g., some system information) may be acquired by a terminal even before a RRC connection. Some configuration information may be periodically provided for terminal(s) from a base station without a request of a terminal or may be provided from a base station at a request of a terminal. Configuration information may be included in one message or may be included in a plurality of messages. In addition, configuration information may be provided for terminal(s) through a combination of one or two or more of downlink control information (DCI), a MAC CE, or a RRC message.

For example, a terminal may go into a RRC_CONNECTED mode and report to a base station a message indicating at least one interested MBS service. Such a message may be transmitted from a terminal to a base station through a combination of one or two or more of uplink control information (UCI), a MAC CE, or a RRC message. An interested MBS service in such a message may refer to one of TMGIs or one of G-RNTIs. A list of TMGIs or G-RNTIs may be included in a DL message received from a base station.

For example, a DL message may be a service availability message listing TMGI#1, TMGI#3, TMGI#5 and TMGI#10. When a terminal is interested in TMGI#5, a terminal may indicate order of TMGI#3 in a message. In other words, a terminal may report 3 to a base station.

For example, a DL message may be a service availability message listing G-RNTI#1, G-RNTI#3, G-RNTI#5 and G-RNTI#10. When a terminal is interested in G-RNTI#10, a terminal may indicate order of G-RNTI#10 in a message. In other words, a terminal may report 4 to a base station.

A base station may provide terminal(s) with a CFR configuration, at least one group common PDSCH configuration, a SS configuration, etc. For example, a base station may provide a CFR configuration, at least one group common PDSCH configuration, or a SS configuration, etc. commonly applied to UE1 and UE2 through a common message. Alternatively, a base station may provide a CFR configuration, a group common PDSCH configuration, or a SS configuration, etc. applied to each of UE1 and UE2 through an individual message.

For example, a base station which received a MBS-related message from a terminal may provide a CFR configuration to a terminal through a RRC message. In addition, a base station which received a MBS-related message from a terminal may provide to a terminal through a RRC message at least one group common PDSCH configuration including a TCI state for at least one G-RNTI value. In addition, a base station which received a MBS-related message from a terminal may provide to a terminal through a RRC message a search space configuration including a TCI state for at least one G-RNTI value. A terminal which received such RRC message(s) may operate based on at least one group common SPS configuration.

For example, a RRC message may be a group common message transmitted in a PTM MCCH or a terminal-dedicated message transmitted in a terminal-specific DCCH (dedicated control channel).

For example, a terminal may be configured with a G-RNTI for each MBS, for each CFR, or for each serving cell. For activation, retransmission, or release of at least one group common SPS configuration, a GC-CS-RNTI (group common-configured scheduling-RNTI) may be configured and used.

When a terminal is not configured with a GC-CS-RNTI for a CFR or a serving cell, when a terminal is configured with a CS-RNTI for a CFR or a serving cell, a terminal may use a CS-RNTI for activation, retransmission, or release of at least one group common SPS configuration.

A base station may associate a list of TMGIs or a list of G-RNTIs with one GC-CS-RNTI value. In this case, a base station may provide a list of TMGIs or a list of G-RNTIs associated with a specific GC-CS-RNTI value.

Each PDSCH configuration (e.g., PDSCH-Config) may include at least one of the following information elements for a MBS.

【Table 6】

```
PDSCH-Config ::= SEQUENCE {

dataScramblingIdentityPDSCH INTEGER {0..1023} OPTIONAL, -- Need S

dmrs-DownlinkForPDSCH-MappingTypeA SetupRelease { DMRS-DownlinkConfig } OPTIONAL, -- Need
M

dmrs-DownlinkForPDSCH-MappingTypeB SetupRelease { DMRS-DownlinkConfig } OPTIONAL, -- Need
M

tci-StatesToAddModList SEQUENCE (SIZE(1..maxNrofTCI-States)) OF TCI-State OPTIONAL, --
Need N

tci-StatesToReleaseList SEQUENCE (SIZE(1..maxNrofTCI-States)) OF TCI-StateId OPTIONAL, -
- Need N

vrb-ToPRB-Interleaver ENUMERATED {n2, n4} OPTIONAL, -- Need S

resourceAllocation      ENUMERATED   {  resourceAllocationType0,   resourceAllocationType1,
dynamicSwitch},
```

```
pdsch-TimeDomainAllocationList  SetupRelease  {  PDSCH-TimeDomainResourceAllocationList  }
OPTIONAL, -- Need M

pdsch-AggregationFactor ENUMERATED { n2, n4, n8 } OPTIONAL, -- Need S

rateMatchPatternToAddModList    SEQUENCE   (SIZE   (1..maxNrofRateMatchPatterns))    OF
RateMatchPattern OPTIONAL, -- Need N

rateMatchPatternToReleaseList    SEQUENCE   (SIZE   (1..maxNrofRateMatchPatterns))    OF
RateMatchPatternId OPTIONAL, -- Need N

rateMatchPatternGroup1 RateMatchPatternGroup OPTIONAL, -- Need R

rateMatchPatternGroup2 RateMatchPatternGroup OPTIONAL, -- Need R

rbg-Size ENUMERATED {config1, config2},

mcs-Table ENUMERATED {qam256, qam64LowSE} OPTIONAL, -- Need S

maxNrofCodeWordsScheduledByDCI ENUMERATED {n1, n2}

...
}
```

As in an example of Table 6, a PDSCH configuration for a MBS associated with a group common identifier may include at least one of data scrambling identification information (e.g., dataScramblingIdentityPDSCH), time domain allocation information (e.g., pdsch-TimeDomainAllocationList), aggregation factor information (e.g., pdsch-Aggregation-Factor), rate matching pattern information (e.g., rateMatchPatternToAddModList), modulation and coding scheme (MCS) information (e.g., mcs-Table), or demodulation reference signal (DMRS) related information (e.g., DMRS-DownlinkConfig).

When a specific CFR is confined to at least one (i.e., a plurality of) BWP having the same numerology, a corresponding CFR may be associated with corresponding at least one BWP. In this case, a CFR configuration or a BWP configuration may follow the following example.

For example, a CFR configuration may include at least one BWP identifier associated with a corresponding CFR. For example, when a CFR is associated with 2 terminal-dedicated BWPs, BWP IDs of corresponding 2 terminal-dedicated BWPs may be included in a CFR configuration.

For example, each BWP configuration may include a CFR identifier of a CFR associated with it. For example, when a CFR is associated with 2 terminal-dedicated BWPs, each configuration of 2 BWPs may include a CFR identifier of a CFR associated with it.

For example, BWP identifier(s) of other BWP(s) associated with a corresponding CFR may be included in a BWP configuration of one BWP associated with a CFR. For example, when a CFR is associated with 2 terminal-dedicated BWPs, a configuration for BWP#1 may include a BWP ID of BWP#2.

For BWP switching between terminal-dedicated BWPs associated with the same CFR, a terminal may continue to receive PTP PDSCH (re)transmission and/or PTM PDSCH (re)transmission of a specific TB without changing a CFR during/after BWP switching (i.e., maintaining a CFR configuration).

For BWP switching between BWPs associated with the same CFR, a terminal may maintain at least one of a PDCCH configuration (e.g., PDCCH-Config), a PDSCH configuration (e.g., PDSCH-Config), a SPS configuration (e.g., SPS-Config), or a PUCCH configuration (e.g., PUCCH-Config) for a corresponding CFR.

When a group common PDSCH is received before BWP switching, a terminal may transmit HARQ-ACK information on a corresponding PDSCH on a PUCCH resource after BWP switching. A PUCCH resource may be allocated to a slot after BWP switching. When a PUCCH resource is allocated to a slot during BWP switching, a terminal may drop or defer HARQ-ACK.

When a group common SPS of a SPS configuration is activated before BWP switching, a terminal may consider that a corresponding SPS configuration is still activated even after BWP switching. When a group common SPS PDSCH of a SPS configuration is received before BWP switching, a terminal may monitor SPS retransmission scheduled by DCI which is CRC-scrambled by a G-CS-RNTI for a corresponding SPS configuration.

When a semi-static PUCCH resource is configured on a CFR, a terminal may maintain a semi-static PUCCH resource after BWP switching.

For BWP switching between terminal-dedicated BWPs which are not associated with the same CFR, a terminal may release a configuration for a previous CFR and apply a configuration for a new CFR.

For BWP switching between BWPs which are not associated with the same CFR, a terminal may release at least one of a PDCCH configuration (e.g., PDCCH-Config), a PDSCH configuration (e.g., PDSCH-Config), a SPS configuration (e.g., SPS-Config), or a PUCCH configuration (e.g., PUCCH-Config) for a previous CFR and apply at least one of a PDCCH configuration (e.g., PDCCH-Config), a PDSCH configuration (e.g., PDSCH-Config), a SPS configuration (e.g., SPS-Config), or a PUCCH configuration (e.g., PUCCH-Config) for a new CFR.

For the above-described examples, in order to transmit to a base station HARQ-ACK information indicating whether a terminal successfully decodes MBS transmission from a base station (i.e., HARQ-ACK collectively refers to HARQ feedback information including ACK or NACK), a base station may pre-provide a PUCCH configuration to a terminal. When a terminal receives a MBS service, a base station may pre-configure to a terminal a separate PUCCH configuration for MBS HARQ-ACK (i.e., a PUCCH configuration for multicast) which is distinguished from a PUCCH configuration for unicast.

In S930, each terminal may perform an operation of PDCCH monitoring and DCI reception based on a specific RNTI and PDSCH reception based on scheduling information included in DCI.

When a search space (SS) for a configured CFR is configured for a terminal, a terminal may monitor a PDCCH to receive CRC-scrambled DCI as a group common identifier (e.g., a G-RNTI or a G-CS-RNTI) on a SS configured in a configured CFR.

When a data unit is available in a MTCH of a MRB (MBS radio bearer) for a MBS service, a base station may construct a TB including a corresponding data unit to transmit it during a specific SPS PDSCH occasion. A specific SPS PDSCH, according to service-to-resource mapping, may be associated with a MTCH of a MRB for a corresponding MBS service, may be associated with a TGMI of a corresponding MBS service, may be associated with a short ID of a corresponding MBS service, or may be associated with a G-RNTI mapped to a corresponding MBS service.

For group common dynamic scheduling of a TB, a base station may transmit DCI to a terminal through a PDCCH and a CRC of corresponding DCI may be scrambled with G-RNTI, G-CS-RNTI or CS-RNTI. A PDCCH may be a group common PDCCH or a terminal-specific PDCCH. Corresponding DCI may include at least one of the following fields:

Identifier Field of DCI Format: This format may indicate one of a MBS-specific DCI format or the existing DCI format for a MBS.

Carrier Identifier Field: This field may indicate a serving cell of a BWP associated with a CFR that a group common PDCCH/PDSCH is transmitted or a cell of a CFR (a serving cell or a MBS specific cell).

BWP Indicator Field: This field may indicate a BWP ID of a BWP associated with a CFR that a group common PDCCH/PDSCH is transmitted or a BWP ID allocated to a CFR.

A frequency domain resource allocation field; a time domain resource allocation field; a VRB-to-PRB mapping field; a PRB bundling size indicator field; a rate matching indicator field; a ZP(zero power) CSI-RS trigger field; a MCS field, a NDI field; a RV(redundancy version) field; a HARQ process number (HPN) field; a downlink allocation index (DAI) field; a transmission power control (TPC) command field for a PUCCH to be scheduled; a PUCCH resource indicator field; a PDSCH-to-HARQ feedback timing indicator field; an antenna port(s) field; a transmission configuration indication (TCI) field; a SRS request field; a DMRS sequence initialization field; a priority indicator field, etc.

For group common dynamic scheduling, a base station may provide the following service-to-resource mapping information through a group common or terminal-specific RRC message or a group common or terminal-specific MAC CE. Service-to-resource mapping information may be provided for a MBS service identified by a TMGI, a G-RNTI, or a GC-CS-RNTI. Data of a MBS service may be transmitted on a MRB of a multicast traffic logical channel (i.e., a MTCH) associated with a MBS service. A RRC message may be a group common message transmitted in a PTM MCCH or may be a terminal-dedicated message transmitted in a terminal-specific DCCH. DCI scheduling a PDSCH carrying MBS service data may indicate at least one of a short ID, a MTCH ID, a MRB ID, a G-RNTI value or a TMGI value for a corresponding MBS service.

When a terminal receives DCI which is CRC-scrambled by an interested G-RNTI, a terminal, based on a predetermined mapping relation, may determine MBS service(s) associated with a predetermined identifier for each PDSCH occasion. A predetermined mapping relation may include at least one of mapping between MBS services and HPNs indicated by DCI, or if available, mapping between MBS services and short ID(s) indicated by DCI. A predetermined identifier may be at least one of a short ID, a MTCH ID, a MRB ID, a G-RNTI value or a TMGI value.

When a terminal is interested in determined MBS service(s), a terminal may receive PDSCH transmission scheduled by corresponding DCI. When a terminal is not interested in determined MBS service(s), a terminal may not receive PDSCH transmission scheduled by corresponding DCI.

In S940, according to a decoding state for PDSCH transmission, a terminal may transmit a HARQ feedback to a base station.

For example, when receiving group common DCI indicating PUCCH resource(s) for MBS HARQ-ACK, a terminal may transmit HARQ-ACK through a PUCCH after receiving a PDSCH scheduled by corresponding DCI.

In addition, a base station may provide a multicast SPS by configuring a terminal common SPS. For a group common SPS PDSCH (i.e., scheduled by RRC, not by DCI), a group common PUCCH resource used as NACK-only based HARQ-ACK (i.e., ACK is not fedback and only NACK is fedback) may be configured semi-statically for at least one group common SPS configuration. Alternatively, a terminal-specific PUCCH resource used as ACK/NACK-based HARQ-ACK (i.e., ACK or NACK is fed back) may be configured for at least one group common SPS configuration. Alternatively, a group common PUCCH resource for ACK and a group common PUCCH resource for NACK may be separately configured for at least one group common SPS configuration.

For different SPS configurations, the same PUCCH resource or a different PUCCH resource may be configured.

When the same PUCCH resource is allocated to different SPS PDSCHs of a different SPS configuration, one HARQ-ACK bit may indicate ACK or NACK for all SPS PDSCHs. In this case, when all SPS PSCHs are successfully received/decoded, a terminal may indicate ACK. In addition, when at least one SPS PDSCH is not successfully received/decoded, a terminal may indicate NACK. Alternatively, different HACQ-ACK bits may indicate ACK or NACK of a different SPS PDSCH, respectively.

When a different PUCCH resource is allocated to different SPS PDSCHs of a different SPS configuration, different HACQ-ACK bits may indicate ACK or NACK of a different SPS PDSCH, respectively.

When a PUCCH resource is not explicitly indicated for SPS configuration index N, a terminal may determine that a PUCCH resource for SPS configuration index N-k (or N+k) is also used for SPS configuration index N (k is 1 or other integer). Alternatively, when a PUCCH resource is not explicitly indicated for SPS configuration index N, a terminal may determine that a HARQ-ACK operation is disabled for a SPS PDSCH of corresponding SPS configuration index N.

When PUCCH-config for multicast is configured, a terminal may determine that a PUCCH resource for group common SPS configuration index(s) is determined based on PUCCH-config for multicast and a PUCCH resource for terminal-specific SPS configuration index(s) is determined based on PUCCH-config for unicast.

When PUCCH-config for multicast is not configured, a terminal may determine that a PUCCH resource for group common SPS configuration index(s) is determined based on PUCCH-config for unicast.

Next, for group common SPS retransmission, a PUCCH resource may be allocated by DCI which is CRC-scrambled by a G-CN-RNTI.

When a terminal determines a PUCCH resource, a terminal may consider corresponding group common SPS retransmission as a group common PDSCH scheduled by DCI.

When PUCCH-config for multicast is configured, a terminal may determine that a PUCCH resource for group common SPS retransmission is determined based on PUCCH-config for multicast.

When PUCCH-config for multicast is not configured, a terminal may determine that a PUCCH resource for group common SPS retransmission is determined based on PUCCH-config for unicast. When a terminal determines a PUCCH resource, a terminal may consider corresponding SPS retransmission as a unicast PDSCH (or a group common PDSCH).

For terminal-specific SPS retransmission of a TB which was first transmitted by a group common SPS PDSCH, a PUCCH resource may be allocated by DCI which is CRC-scrambled by a SC-RNTI.

In this case, when a terminal determines a PUCCH resource, a terminal may consider terminal-specific SPS retransmission as a unicast PDSCH. Alternatively, when a terminal determines a PUCCH resource, a terminal may consider that corresponding terminal-specific SPS retransmission is a group common PDSCH scheduled by DCI.

When PUCCH-config for multicast is configured, a terminal may determine that a PUCCH resource for group common SPS retransmission is determined based on PUCCH-config for multicast. Alternatively, although PUCCH-config for multicast is configured, a terminal may determine that a PUCCH resource for group common SPS retransmission is determined based on PUCCH-config for unicast.

When PUCCH-config for multicast is not configured, a terminal may determine that a PUCCH resource for group common SPS retransmission is determined based on PUCCH-config for unicast.

NACK-only based HARQ-ACK may be applied to SPS PDSCH retransmission or a terminal-specific ACK/NACK based HARQ-ACK may be also applied.

As in S940 for UE2 in an example of FIG. 9, when decoding for a TB at a PDSCH transmission occasion is not successful, a terminal may transmit HARQ NACK to a base station on a PUCCH resource determined as in the above-described examples in a configured UL CFR.

With a corresponding PUCCH resource, a terminal may also transmit HARQ-ACK information for other PDSCH transmission (e.g., a unicast SPS PDSCH, a dynamic unicast PDSCH, PTP retransmission, and/or a dynamic group common PDSCH). In this case, in order to multiplex on a PUCCH HARQ-ACK for a variety of PDSCHs in a (sub) slot (e.g., a SPS PSCH for multicast, a SPS PDSCH for unicast, a multicast PDSCH which is dynamically scheduled, and/or a unicast PDSCH which is dynamically scheduled), a terminal may configure a codebook based on the above-described examples.

In addition, when an aggregation factor (e.g., pdsch-AggregationFactor) is configured for a G-RNTI or the number of repetitions (e.g., repetition_number) is indicated by a base station in DCI, a TB scheduled by group common DCI may be repeated. For example, when a configuration is performed, in each symbol allocation among each of consecutive slots corresponding to an aggregation factor or among each of consecutive slots corresponding to the number of repetitions, N-th HARQ transmission of a TB may be transmitted.

In step S950, the UE (eg, UE2) may perform PDCCH monitoring and DCI reception based on a specific RNTI, and PDSCH reception based on scheduling information included in the DCI.

When a base station receives HARQ NACK for a PDSCH transmitted based on a specific TCI state, a base station may retransmit a PDCCH and a PDSCH based on a corresponding TCI state in a DL CFR configured for retransmission of a corresponding TB. In order to receive retransmission of a corresponding TB, a terminal, based on a corresponding TCI state on a search space configured in a DL CFR, may monitor a group common and/or terminal-specific PDCCH.

A base station may retransmit a TB by a terminal-specific PDCCH only for one terminal (e.g., UE2) in a group. As the remaining terminals in a group successfully received a corresponding TB, retransmission for a corresponding TB may not be received.

When a terminal receives a PDCCH for TB retransmission, a terminal may receive a PDSCH scheduled by DCI of a corresponding PDCCH.

When a terminal successfully decodes a TB on a PDSCH, based on a predetermined mapping relation, a terminal may consider that a decoded TB is associated with a MTCH, a MRB, a TMGI, a G-RNTI, and/or a short ID of a MBS service. A predetermined mapping relation may include mapping between MBS services and HPNs indicated by DCI, and/or if available, mapping between MBS services and short ID(s) indicated by DCI.

For example, a terminal may receive a group common PDSCH of a TB for a HARQ process identified by a specific HPN. A terminal may store a corresponding TB in a soft buffer of a corresponding HARQ process. For example, a group common PDSCH may correspond to PTM PDSCH transmission.

A base station may schedule terminal-specific PDSCH transmission (i.e., PTP retransmission) of a corresponding TB for retransmission of a corresponding TB to a corresponding terminal.

In receiving PTP retransmission having the HPN and a non-toggled NDI, a terminal may expect PTP retransmission of a corresponding TB after transmitting NACK for a corresponding TB.

For example, whether to additionally receive retransmission of the same TB on a group common PDSCH having the same HPN and a non-toggled NDI may be determined in a terminal. When PTP retransmission is expected after transmitting NACK for a corresponding TB, a terminal may de-prioritize a group common PDSCH scheduled by group common DCI having the same HPN and a non-toggled NDI. For example, when a terminal may not receive both a de-prioritized group common PDSCH and other transmission, a terminal may drop reception of a group common PDSCH and receive the other transmission.

After PTP retransmission associated with a specific HPN, a base station may determine whether to schedule new transmission for a group common PDSCH by transmitting group common DCI associated with the same HPN and including a toggled NDI.

For example, when new transmission has a lower priority than PTP retransmission, a terminal may not receive new transmission of a group common PDSCH before successfully transmitting ACK for PTP retransmission. When new transmission has a higher priority than PTP retransmission, a terminal may receive new transmission of a group common PDSCH even before successfully transmitting ACK for PTP retransmission. Otherwise (for example, when new transmission has the same priority as PTP retransmission), a terminal may not receive new transmission of a group common PDSCH before successfully transmitting ACK for PTP retransmission.

After unicast transmission associated with a specific HPN, a base station may determine whether to schedule new transmission for a group common PDSCH by transmitting group common DCI associated with the same HPN and including a toggled NDI.

For example, when new transmission has a lower priority than unicast transmission, a terminal may not receive new transmission of a group common PDSCH before successfully transmitting ACK for unicast transmission. When new transmission has a higher priority than unicast transmission, a terminal may receive new transmission of a group common PDSCH even before successfully transmitting ACK for unicast transmission. Otherwise (for example, when new transmission has the same priority as unicast transmission), a terminal may not receive new transmission of a group common PDSCH before successfully transmitting ACK for unicast transmission.

After transmitting a group common PDCCH/PDSCH associated with a specific HPN, a base station may determine whether to schedule new transmission for a unicast PDSCH by transmitting terminal-specific DCI associated with the same HPN and including a toggled NDI.

For example, when new transmission has a lower priority than group common transmission, a terminal may not receive new transmission of a unicast PDSCH before successfully transmitting ACK for a group common PDSCH. When new transmission has a higher priority than group common transmission, a terminal may receive new transmission of a unicast PDSCH even before successfully transmitting ACK for a group common PDSCH. Otherwise (for example, when new transmission has the same priority as group common transmission), a terminal may receive new transmission of a unicast PDSCH even before successfully transmitting ACK for a group common PDSCH.

In the above-described examples, a terminal may determine a priority of transmission based on one of the following options.

A priority of transmission may be configured by a RRC message. For example, according to a high priority (HP) or a low priority (LP), according to a priority of the highest logical channel of a transmitted TB, or according to QoS KPI like 5QI of a transmitted TB, a priority of transmission may be configured.

A priority may be indicated by DCI scheduling corresponding transmission. For example, according to a high priority (HP) or a low priority (LP), according to a priority of the highest logical channel of a transmitted TB, or according to QoS KPI like 5QI of a transmitted TB, a priority of transmission may be indicated.

A priority of transmission may be determined according to a priority of HARQ-ACK (e.g., a HP or a LP).

Next, for group common DCI which is CRC-scrambled by a G-RNTI, a terminal may not expect retransmission of a TB or a new TB by group common DCI (regardless of PUCCH ACK/NACK transmission) before the end of PDSCH repetition.

For example, a terminal may expect TB retransmission based on group common DCI and/or terminal-specific DCI having a G-RNTI after transmitting PUCCH NACK. Here, group common DCI may indicate enable or disable of retransmission based on a C-RNTI. A terminal may expect retransmission based on group common DCI after transmission of NACK-only HARQ-ACK information. A terminal may expect retransmission based on terminal-specific DCI after transmission of ACK/NACK-based HARQ-ACK information when being configured by a RRC, a MAC CE or DCI.

As an additional example, a terminal may expect new TB transmission based on group common DCI having a G-RNTI after transmitting PUCCH ACK. A terminal may expect new transmission based on terminal-specific DCI after transmission of ACK/NACK-based HARQ-ACK information when being configured by a RRC, a MAC CE or DCI.

For group common DCI which is CRC-scrambled by a G-RNTI, a terminal may not expect new TB transmission by group common DCI (regardless of PUCCH ACK/NACK transmission) before the maximum number of HARQ retransmissions.

In this case, a base station may determine the maximum number of HARQ retransmissions for a G-RNTI or may indicate the maximum number of HARQ retransmissions through DCI.

For group common DCI which is CRC-scrambled by a G-RNTI, a terminal may not expect new TB transmission by group common DCI within a RTT time after PUCCH ACK/NACK transmission.

For example, a terminal may expect TB retransmission based on group common DCI after a RTT time elapses after PUCCH ACK/NACK transmission.

Alternatively, a terminal may expect TB retransmission based on group common DCI even before PUCCH ACK/NACK transmission. In this case, in detecting retransmission, a terminal may suspend PUCCH ACK/NACK transmission. For example, when retransmission is detected, a terminal may drop HARQ-ACK for previous transmission for a G-RNTI and/or a HPN associated with retransmission.

In receiving a TB on a group common PDSCH scheduled by DCI which is CRC-scrambled by a G-RNTI, a terminal may receive PTP PDSCH retransmission of a corresponding TB scheduled by DCI which is CRC-scrambled by a C-RNTI by monitoring a search space/a CORESET associated with a corresponding G-RNTI.

Depending on the decoding status for PDSCH transmission in step S960, the terminal may transmit HARQ feedback to the base station.

For example, when TB decoding at a PDSCH transmission occasion is successful, a terminal may transmit HARQ-ACK information to a base station on a PUCCH resource according to the above-described examples in a configured UL CFR.

With a corresponding PUCCH resource, a terminal may also transmit HARQ-ACK information for other PDSCH transmission (e.g., a unicast SPS PDSCH, a dynamic unicast PDSCH, PTP retransmission, and/or a dynamic group common PDSCH). In this case, in order to multiplex on a PUCCH HARQ-ACK for a variety of PDSCHs in a (sub) slot (e.g., a SPS PSCH for multicast, a SPS PDSCH for unicast, a multicast PDSCH which is dynamically scheduled, and/or a unicast PDSCH which is dynamically scheduled), a terminal may configure a codebook based on the above-described examples.

General Device to which the Present Disclosure may be applied

FIG. 10 is a diagram which illustrates a block diagram of a wireless communication system according to an embodiment of the present disclosure.

In reference to FIG. 10, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1.  A method for performing downlink reception by a user equipment (UE) in a wireless communication system, the method comprising:

    receiving configuration information on at least one first control resource set (CORESET) for a UE-specific physical downlink control channel (PDCCH);
    receiving configuration information on at least one second CORESET for a group common PDCCH;
    based on overlapping of the at least one first CORESET and the at least one second CORESET at the same PDCCH monitoring occasion, performing monitoring on the UE-specific PDCCH and the group common PDCCH accodring to quasi co-location (QCL) properties configured for a specific CORESET; and
    receiving control information on at least one of the UE-specific PDCCH or the group common PDCCH,
    wherein the specific CORESET corresponds to a CORESET associated with a search space set having a lowest index among the at least one first CORESET and the at least one second CORESET, and
    wherein the monitored group common PDCCH includes a PDCCH for multicast transmission except for a PDCCH for broadcast transmission.

2.  The method of claim 1,
    wherein a CORESET in which the UE-specific PDCCH is monitored and a CORESET in which the PDCCH for multicast transmission is monitored correspond to CORESETs having QCL properties identical to the QCL properties configured for the specific CORESET.

3.  The method of claim 1,
    wherein the QCL properties configured for the specific CORESET corresponds to the QCL type configured as the 'TypeD' properties.

4.  The method of claim 1,
    wherein a search space set with the lowest index corresponds to a common search space set with a lowest search space index in the cell with a lowest cell index among one or more cells.

5. The method of claim 4,
wherein the one or more cells correspond to one or more serving cells for which a common frequency resource (CFR) is configured.

6. The method of claim 4,
wherein the one or more cells correspond to one or more serving cells in which the bandwidth part associated with a CFR is activated.

7. The method of claim 1,
wherein a search space set with the lowest index corresponds to a UE specific search space set with a lowest search space index in the cell with a lowest cell index among one or more cells.

8. The method of claim 7,
wherein the UE-specific search space set is determined from among all UE-specific search space sets having at least one PDCCH candidate in an overlapping PDCCH monitoring occasion for the UE-specific PDCCH and the group common PDCCH.

9. The method of claim 7,
wherein a number of active transmission configuration indicator (TCI) states related to the monitoring is determined based on the at least one first CORESET and the at least one second CORESET.

10. A user equipment (UE) for performing downlink reception in a wireless communication system, the UE comprising:

    at least one transceiver; and
    at least one processor connected to the at least one transceiver,
    wherein the at least one processor is configured to:

        receive configuration information on at least one first control resource set (CORESET) for a UE-specific physical downlink control channel (PDCCH);
        receive configuration information on at least one second CORESET for a group common PDCCH;
        based on overlapping of the at least one first CORESET and the at least one second CORESET at the same PDCCH monitoring occasion, perform monitoring on the UE-specific PDCCH and the group common PDCCH accodring to quasi co-location (QCL) properties configured for a specific CORESET; and
        receive control information on at least one of the UE-specific PDCCH or the group common PDCCH,
        wherein the specific CORESET corresponds to a CORESET associated with a search space set having a lowest index among the at least one first CORESET and the at least one second CORESET, and
        wherein the monitored group common PDCCH includes a PDCCH for multicast transmission except for a PDCCH for broadcast transmission.

11. A method for performing downlink transmission by a base station in a wireless communication system, the method comprising:

        transmitting configuration information on at least one first control resource set (CORESET) for a UE-specific physical downlink control channel (PDCCH);
        transmitting configuration information on at least one second CORESET for a group common PDCCH; and
        transmitting control information on at least one of the UE-specific PDCCH or the group common PDCCH,
        wherein, based on overlapping of the at least one first CORESET and the at least one second CORESET at the same PDCCH monitoring occasion, monitoring on the UE-specific PDCCH and the group common PDCCH accodring to quasi co-location (QCL) properties configured for a specific CORESET is performed;
        wherein the specific CORESET corresponds to a CORESET associated with a search space set having a lowest index among the at least one first CORESET and the at least one second CORESET, and
        wherein the monitored group common PDCCH includes a PDCCH for multicast transmission except for a PDCCH for broadcast transmission.

12. A base station for performing downlink transmission in a wireless communication system, the base station comprising:

at least one transceiver; and
at least one processor connected to the at least one transceiver,
wherein the at least one processor is configured to:

transmit configuration information on at least one first control resource set (CORESET) for a UE-specific physical downlink control channel (PDCCH);
transmit configuration information on at least one second CORESET for a group common PDCCH; and
transmits control information on at least one of the UE-specific PDCCH or the group common PDCCH,
wherein, based on overlapping of the at least one first CORESET and the at least one second CORESET at the same PDCCH monitoring occasion, monitoring on the UE-specific PDCCH and the group common PDCCH accoding to quasi co-location (QCL) properties configured for a specific CORESET is performed;
wherein the specific CORESET corresponds to a CORESET associated with a search space set having a lowest index among the at least one first CORESET and the at least one second CORESET, and
wherein the monitored group common PDCCH includes a PDCCH for multicast transmission except for a PDCCH for broadcast transmission.

13. A processing unit configured to control a user equipment (UE) performing downlink reception in a wireless communication system, the processing unit comprising:

at least one processor; and
at least one computer memory which is operably connected to the at least one processor and stores instructions performing operations based on being executed by the at least one processor,
wherein the operations include:

receiving configuration information on at least one first control resource set (CORESET) for a UE-specific physical downlink control channel (PDCCH);
receiving configuration information on at least one second CORESET for a group common PDCCH;
based on overlapping of the at least one first CORESET and the at least one second CORESET at the same PDCCH monitoring occasion, performing monitoring on the UE-specific PDCCH and the group common PDCCH accoding to quasi co-location (QCL) properties configured for a specific CORESET; and
receiving control information on at least one of the UE-specific PDCCH or the group common PDCCH,
wherein the specific CORESET corresponds to a CORESET associated with a search space set having a lowest index among the at least one first CORESET and the at least one second CORESET, and
wherein the monitored group common PDCCH includes a PDCCH for multicast transmission except for a PDCCH for broadcast transmission.

14. At least one non-transitory computer readable medium storing at least one instruction, wherein:
the at least one instruction controls a device which performs downlink reception in a wireless communication system by being executed by at least one processor to:

receive configuration information on at least one first control resource set (CORESET) for a UE-specific physical downlink control channel (PDCCH);
receive configuration information on at least one second CORESET for a group common PDCCH;
based on overlapping of the at least one first CORESET and the at least one second CORESET at the same PDCCH monitoring occasion, perform monitoring on the UE-specific PDCCH and the group common PDCCH accoding to quasi co-location (QCL) properties configured for a specific CORESET; and
receive control information on at least one of the UE-specific PDCCH or the group common PDCCH,
wherein the specific CORESET corresponds to a CORESET associated with a search space set having a lowest index among the at least one first CORESET and the at least one second CORESET, and
wherein the monitored group common PDCCH includes a PDCCH for multicast transmission except for a PDCCH for broadcast transmission.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

# FIG.4

# FIG.5

Resource grid

A carrier
(up to 3300 subcarriers,i,e.,275 RBs)

A BWP

1 RB=12 subcarrier

1 RE

1 subcarrier

1 Symbol

l=0 ·····

k=0

# FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601　　S602　　S603　　S604　　S605　　S606　　S607　　S608

· DL/UL ACK/NACK
· UE CQI/PMI RI REPORT
　USING PUSCH AND PUCCH

# FIG.7

```
                    ┌─────────┐
                    │  START  │
                    └────┬────┘
                         │
                         ▼
   ┌──────────────────────────────────────┐   S710
   │  Receive configuration information on a │
   │ first CORESET for a UE-specific PDCCH and│
   │  configuration information on a second  │
   │   CORESET for a group common PDCCH     │
   └──────────────────┬───────────────────┘
                      │
                      ▼
   ┌──────────────────────────────────────┐   S720
   │  Perform monitoring on the UE-specific  │
   │    PDCCH and the group common PDCCH    │
   │  according to QCL properties configured │
   │        for a specific CORESET          │
   └──────────────────┬───────────────────┘
                      │
                      ▼
   ┌──────────────────────────────────────┐   S730
   │      Receive control information on     │
   │ the UE-specific PDCCH/group common PDCCH│
   └──────────────────┬───────────────────┘
                      │
                      ▼
                 ┌─────────┐
                 │   END   │
                 └─────────┘
```

FIG.8

START

Transmit configuration information on a
first CORESET for a UE-specific PDCCH and
configuration information on a second
CORESET for a group common PDCCH — S810

Transmit control information on
the UE-specific PDCCH/group common PDCCH — S820

END

# FIG.9

EP 4 429 145 A1

# FIG.10

## INTERNATIONAL SEARCH REPORT

| International application No. |
| --- |
| **PCT/KR2022/017282** |

**A.    CLASSIFICATION OF SUBJECT MATTER**

**H04L 1/18**(2006.01)i; **H04L 5/00**(2006.01)i; **H04W 72/04**(2009.01)i; **H04W 72/12**(2009.01)i

According to International Patent Classification (IPC) or to both national classification and IPC

**B.    FIELDS SEARCHED**

Minimum documentation searched (classification system followed by classification symbols)

H04L 1/18(2006.01); H04W 72/02(2009.01); H04W 72/04(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MBS(Multicast and Broadcast Services), PDCCH(physical downlink control channel), CORESET(control resource set), 단말 특정(UE-specific), 그룹 공통(group common), QCL(Quasi co-location), 타입 (type)

**C.    DOCUMENTS CONSIDERED TO BE RELEVANT**

| Category* | Citation of document, with indication, where appropriate, of the relevant passages | Relevant to claim No. |
| --- | --- | --- |
| X<br>Y | SAMSUNG. Group scheduling for RRC_CONNECTED UEs. R1-2109515, 3GPP TSG RAN WG1 Meeting #106bis-e, e-Meeting. 01 October 2021.<br>    See section 2.2. | 1-4,7-8,10-14<br>5-6,9 |
| Y | LG ELECTRONICS INC. Support of group scheduling for RRC_CONNECTED UEs. R1-2109983, 3GPP TSG RAN WG1 Meeting #106bis-e, e-Meeting. 02 October 2021.<br>    See pages 2-3 and 9. | 5-6 |
| Y | KR 10-2019-0129011 A (LG ELECTRONICS INC.) 19 November 2019 (2019-11-19)<br>    See paragraph [0181]. | 9 |
| A | NOKIA et al. Group Scheduling Mechanisms to Support 5G Multicast / Broadcast Services for RRC_CONNECTED UEs. R1-2109316, 3GPP TSG RAN WG1 Meeting #106bis-e, e-Meeting. 01 October 2021.<br>    See section 2.4. | 1-14 |

☑ Further documents are listed in the continuation of Box C.        ☑ See patent family annex.

| | | |
| --- | --- | --- |
| * | Special categories of cited documents: | |
| "A" | document defining the general state of the art which is not considered to be of particular relevance | |
| "D" | document cited by the applicant in the international application | |
| "E" | earlier application or patent but published on or after the international filing date | |
| "L" | document which may throw doubts on priority claim(s) or which is cited to establish the publication date of another citation or other special reason (as specified) | |
| "O" | document referring to an oral disclosure, use, exhibition or other means | |
| "P" | document published prior to the international filing date but later than the priority date claimed | |

"T"  later document published after the international filing date or priority date and not in conflict with the application but cited to understand the principle or theory underlying the invention

"X"  document of particular relevance; the claimed invention cannot be considered novel or cannot be considered to involve an inventive step when the document is taken alone

"Y"  document of particular relevance; the claimed invention cannot be considered to involve an inventive step when the document is combined with one or more other such documents, such combination being obvious to a person skilled in the art

"&"  document member of the same patent family

| Date of the actual completion of the international search | Date of mailing of the international search report |
| --- | --- |
| **24 February 2023** | **27 February 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2022/017282**

C.    DOCUMENTS CONSIDERED TO BE RELEVANT

| Category* | Citation of document, with indication, where appropriate, of the relevant passages | Relevant to claim No. |
|---|---|---|
| A | QUALCOMM INCORPORATED. View on group scheduling for Multicast RRC_CONNECTED UEs. R1-2110210, 3GPP TSG RAN WG1 Meeting #106bis-e, e-Meeting. 02 October 2021. See sections 2.1-2.8. | 1-14 |

Form PCT/ISA/210 (second sheet) (July 2022)

**INTERNATIONAL SEARCH REPORT**
**Information on patent family members**

International application No.

**PCT/KR2022/017282**

| Patent document cited in search report | | | Publication date (day/month/year) | Patent family member(s) | | | Publication date (day/month/year) |
|---|---|---|---|---|---|---|---|
| KR | 10-2019-0129011 | A | 19 November 2019 | CN | 110832919 | A | 21 February 2020 |
| | | | | EP | 3629645 | A1 | 01 April 2020 |
| | | | | JP | 2020-535727 | A | 03 December 2020 |
| | | | | US | 11082154 | B2 | 03 August 2021 |
| | | | | US | 2021-0050936 | A1 | 18 February 2021 |
| | | | | WO | 2019-216640 | A1 | 14 November 2019 |

Form PCT/ISA/210 (patent family annex) (July 2022)